# EUROPEAN PATENT APPLICATION

(11) **EP 1 876 801 A2**
(43) Date of publication of application: **09.01.2008**
(21) Application number: 07012271.8
(22) Date of filing: 22.06.2007
(51) Int. Cl.: H04M 1/02, G06F 1/16

(54) **Dual axis rotation type portable communication terminal and method for controlling the same**

(30) Priority: 04.07.2006 KR 20060062483
(71) Applicant: Samsung Electronics Co., Ltd., Suwon-si, Gyeonggi-Do (KR)
(72) Inventor: Jung, Soo-IK, Suwon-si, Gyeonggi-do (KR); Hyun, Seung-Hee, Suwon-si, Gyeonggi-do (KR); Kim, Jong-Yang, Suwon-si, Gyeonggi-do (KR); Jeon, Yong-Woo, Suwon-si, Gyeonggi-do (KR); Ko, Byung-Yeol, Suwon-si, Gyeonggi-do (KR); Kwon, Dong-Wook, Suwon-si, Gyeonggi-do (KR)
(74) Representative: Lang, Johannes

(57) **Abstract**

Provided is a dual axis rotation type portable communication terminal including a main housing having at least one key and a rotatable housing having at least one display device, the rotatable housing being connected to the main housing so as to rotate about a first hinge axis extending in a longitudinal direction of the main housing so that the rotatable housing is cradled on the main housing at an angle, the rotatable housing being adapted to rotate about a second hinge axis extending parallel to the first hinge axis so that the rotatable housing is cradled on the main housing at an angle in at least two different positions relative to the main housing.

## Description

### BACKGROUND OF THE INVENTION

### 1. Field of the Invention:

The present invention relates to portable communication terminals including DMB phones, game phones, chatting phones, camera phones, MP3 phones, cellular phones, PCSs, PDAs, and HHPs. More particularly, the present invention relates to a portable communication terminal having a display device cradled on the body at an angle in various manners so that the user can conveniently watch information displayed in a DMB mode or TV mode.

### 2. Description of the Related Art:

The term "portable communication apparatus" refers to an electronic apparatus that a user can carry to perform wireless communication with a desired partner. To facilitate portability, designs of such portable communication apparatuses tend to be compact, slim, and light. Further, designs of portable communication apparatuses are moving toward providing multimedia capabilities with a wider variety of functions. In particular, future portable communication apparatuses are expected to incorporate a greater degree of multi-functionality and be capable of multi-purpose utilization. In addition, future portable communication apparatuses are expected to be more compact, light, and capable of being modified to be suitable for various multimedia or Internet environments.

Conventional portable communication apparatuses may be classified into various categories according to their appearance, such as bar-type portable communication apparatuses, flip-type portable communication apparatuses, and folder-type portable communication apparatuses. The bar-type communication apparatuses have a single housing shaped like a bar. The flip-type communication apparatuses have a flip rotatably coupled to a bar-shaped housing by a hinge device. The folder-type communication apparatuses have a folder connected to a single bar-shaped housing by a hinge device in such a manner that the folder can be rotated to fold onto or unfold from the housing.

Portable communication apparatuses may also be classified into neck wearable type communication apparatuses and wrist wearable type communication apparatuses according to the position or way in which users retain the communication apparatuses. The neck wearable type communication apparatuses are worn around users' neck, and the wrist wearable type communication apparatuses are worn around users' wrist.

In addition, portable communication apparatuses may be classified into rotation-type communication apparatuses and sliding-type communication apparatuses according to the manner of opening and closing the communication apparatuses. In the rotation-type communication apparatuses, two housings are coupled to each other in such a manner that one housing rotates to be opened or closed relative to the other while they face each other. In the sliding-type communication apparatuses, two housings are coupled to each other in such a manner that one housing slides along a longitudinal direction to be opened or closed relative to the other housing.

In addition to the above-listed conventional portable communication terminals, Korean Patent Application No. 2005-98172, the entire disclosure of which is hereby incorporated by reference, discloses a portable communication terminal having a display device cradled on the body at an angle so that the user can conveniently watch information displayed on the display device. Particularly, after sliding on the body, the display device is cradled thereon at an angle.

However, the portable communication terminal disclosed in the above-mentioned application has a problem in that the display device is cradled at an angle in a single manner. In addition, the display device is cradled by a complicated cradling device. As a result, the user can neither cradle the display easily nor conveniently watch moving pictures.

For example, when the portable communication terminal is placed on a table to watch images displayed on the display device, the user may find it inconvenient to watch the images, because each user has a different physique. Furthermore, the display device is cradled in two steps, i.e. steps of sliding and rotating the device. Therefore, it has been increasingly requested to maximize the user's convenience by making it possible to cradle the display device of the portable communication terminal through a simple and convenient process.

In practice, the display device of a portable communication terminal can be watched conveniently when positioned a little lower than the user's eyes, and is more conveniently watched when hung in the air. In addition, the user will be pleased if the display device can be cradled in one of several possible directions instead of a single direction. Furthermore, the user can watch the display device very conveniently if it can be cradled at an angle in various manners.

Accordingly, there is a need for an improved portable communication terminal having a display device cradled in more than one manner so that moving pictures can be watched conveniently.

### SUMMARY OF THE INVENTION

Exemplary embodiments of the present invention address at least the above problems and/or disadvantages and provide at least the advantages described below. Accordingly, an aspect of an exemplary embodiment of the present invention is to provide a portable communication terminal having a display device cradled in at least two manners so that moving pictures can be watched conveniently in a DBM mode or TV mode.

Another aspect of an exemplary embodiment of the present invention is to provide a portable communication terminal having a display device cradled at an angle through a simple and convenient process.

Another aspect of an exemplary embodiment of the present invention is to provide a portable communication terminal enabling its user to conveniently watch moving pictures in a DBM mode.

Another aspect of an exemplary embodiment of the present invention is to provide a portable communication terminal having a display device cradled at an angle in at least two manners so that displayed data can be watched conveniently.

Another aspect of an exemplary embodiment of the present invention is to provide a portable communication terminal having a display device cradled at an angle in at least two manners, when the device is in a horizontal view mode, so that displayed data can be watched conveniently.

Another aspect of an exemplary embodiment of the present invention is to provide a portable communication terminal having speaker devices positioned on both outer sides of the main housing, respectively, so that, when the display device is cradled at an angle, stereo sounds can be provided.

Another aspect of an exemplary embodiment of the present invention is to provide a portable communication terminal having QWERTY keys arranged at the center of the main housing and left and right side keys positioned on both sides of the QWERTY keys, respectively, so that data can be inputted conveniently in a multimedia environment, e.g. a QWERTY mode or game mode.

Another aspect of an exemplary embodiment of the present invention is to provide a portable communication terminal having a simple mechanical structure for cradling the display device at an angle so that the terminal can be assembled with reduced costs.

Another aspect of an exemplary embodiment of the present invention is to provide a portable communication terminal capable of turning on/off first and second display devices in a controlled manner according to their position.

Another aspect of an exemplary embodiment of the present invention is to provide a portable communication terminal adapted to display a character/number in a corresponding one of two regions, which are allocated to each key of the key input unit, according to the position of display devices.

In order to accomplish the above aspects of exemplary embodiments of the present invention, there is provided a dual axis rotation type portable communication terminal including a main housing having at least one key and a rotatable housing having at least one display device, the rotatable housing being connected to the main housing so as to rotate about a first hinge axis extending in a longitudinal direction of the main housing so that the rotatable housing is cradled on the main housing at an angle, the rotatable housing being adapted to rotate about a second hinge axis extending parallel to the first hinge axis so that the rotatable housing is cradled on the main housing at an angle in at least two different positions relative to the main housing.

In accordance with another aspect of an exemplary embodiment of the present invention, there is provided a dual axis rotation type portable communication terminal including a first user interface unit and a second user interface unit adapted to rotate about a first hinge axis towards or away from the first user interface unit by means of a connection arm, the second user interface unit being adapted to rotate about a second hinge axis towards or away from the first user interface unit by means of the connection arm so as to be cradled on the first user interface unit at an angle in at least two different positions relative to the main housing, the second hinge axis extending parallel to the first hinge axis.

In accordance with another aspect of an exemplary embodiment of the present invention, there is provided a portable communication terminal including a main housing; a rotatable housing; a first display device positioned on a top surface of the rotatable housing; a second display device positioned on a bottom surface of the rotatable housing so as to face away from the first display device; a display device position sensing unit for sensing a position of the first and second display devices relative to the housing; a key input unit having a number of keys, each key having first and second regions, a character/number and a mirror image of the character/number being positioned in the first and second regions, respectively; and a control unit for determining a current mode of the portable communication terminal based on a position signal outputted by the display device position sensing unit, the control unit for controlling the display device, the control unit for controlling the key input unit so that characters/numbers in a corresponding region of the keys are displayed.

In accordance with another aspect of an exemplary embodiment of the present invention, there is provided a method for controlling first and second display devices and a key input unit of a portable communication terminal, the key input unit having a number of keys, each key having first and second regions, the method including the steps of (a) sensing a position signal indicating a positional condition of the display devices and (b) determining a current mode of the portable communication terminal based on the position signal, turning on/off the display devices in a controlled manner, and controlling the key input unit so that characters/numbers in a corresponding region of the keys of the key input unit are displayed.

In accordance with yet another aspect of an exemplary embodiment of the present invention, there is provided a portable communication terminal comprising a main housing; a rotatable housing; a first display device positioned on a top surface of the rotatable housing; a second display device positioned on a bottom surface of the rotatable housing so as to face away from the first display device; a display device position sensing unit for sensing a position of the first and second display devices relative to the main housing; and a control unit for determining a current mode of the portable communication terminal based on a position signal outputted by the display device position sensing unit, the control unit for controlling the display device.

In accordance with still another aspect of an exemplary embodiment of the present invention, there is provided a portable communication terminal comprising a main housing; a rotatable housing; a rotatable housing position sensing unit for sensing a position of the rotatable housing relative to the main housing; a key input unit having a number of keys, each key having first and second regions, a character/number and a mirror image of the character/number being positioned in the first and second regions, respectively; and a control unit for determining a current mode of the portable communication terminal based on a position signal outputted by the rotatable housing position sensing unit, the control unit for controlling the key input unit so that characters/numbers in a corresponding region of the keys are displayed.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain embodiments of the present invention will be more apparent from the following description taken in conjunction with the accompanying drawings, in which:
FIG. 1 is a perspective view showing a portable communication terminal according to an exemplary embodiment of the present invention;
FIG. 2 is a perspective view showing a portable communication terminal with its display device rotated about a first hinge axis and cradled at an angle according to an exemplary embodiment of the present invention;
FIG. 3 is a lateral view of the portable communication terminal shown in FIG. 2;
FIG. 4 is a perspective view showing a portable communication terminal with its display device rotated about a second hinge axis and cradled at an angle according to an exemplary embodiment of the present invention;
FIG. 5 is a lateral view of the portable communication terminal shown in FIG. 4;
FIG. 6 is a perspective view showing a portable communication terminal with its display device rotated about first and second hinge axes and cradled at an angle according to an exemplary embodiment of the present invention;
FIG. 7 shows the construction of a portable communication terminal according to an exemplary embodiment of the present invention;
FIGs. 8a and 8b show keys of a key input unit of the portable communication terminal shown in FIG. 7, respectively; and
FIG. 9 is a flowchart showing a method for controlling display devices and keys of a portable communication terminal, based on the position of the display devices, according to an exemplary embodiment of the present invention.
Throughout the drawings, the same drawing reference numerals will be understood to refer to the same elements, features, and structures.

### DETAILED DESCRIPTION OF EXEMPLARY EMBODIMENTS

The matters defined in the description such as a detailed construction and elements are provided to assist in a comprehensive understanding of the embodiments of the invention and are merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

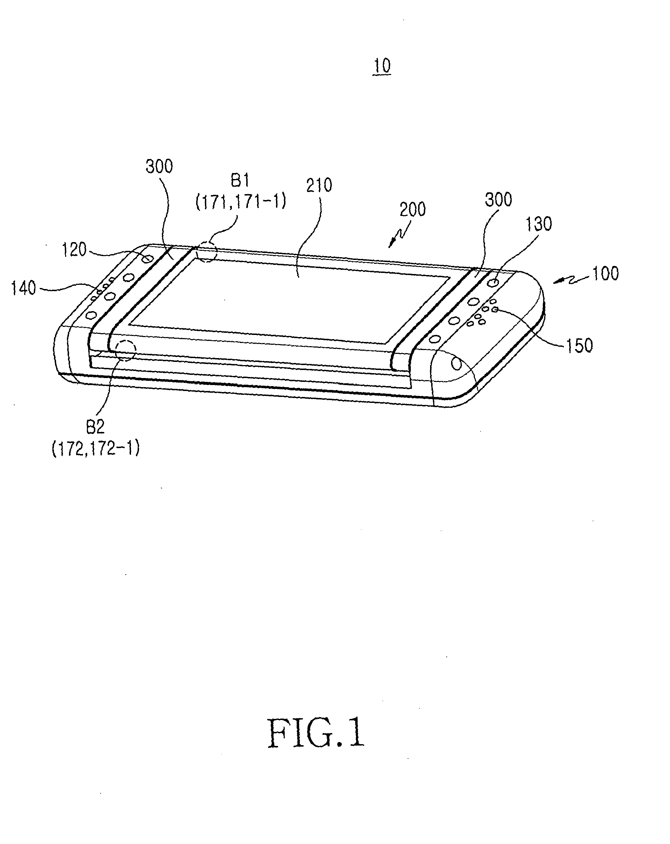

As shown in FIG. 1, a portable communication terminal 10 according to an exemplary embodiment of the present invention includes a main housing 100, a rotatable housing 200, and a connection arm 300 for rotatably connecting the rotatable housing 200 to the main housing 100. The main and rotatable housings 100 and 200 are provided with first and second user interface units, respectively. The first user interface unit is configured as a data input device, and the second user interfacing as a data output device for displaying inputted data. As the data output device, FIG. 1 shows a first display device 210 that is always exposed and, as the data input device, left and right second keys 120 and 130 are positioned to the left and right of the first display device 210, respectively, and are also always exposed. FIG. 1 also shows left and right speaker devices 140 and 150.

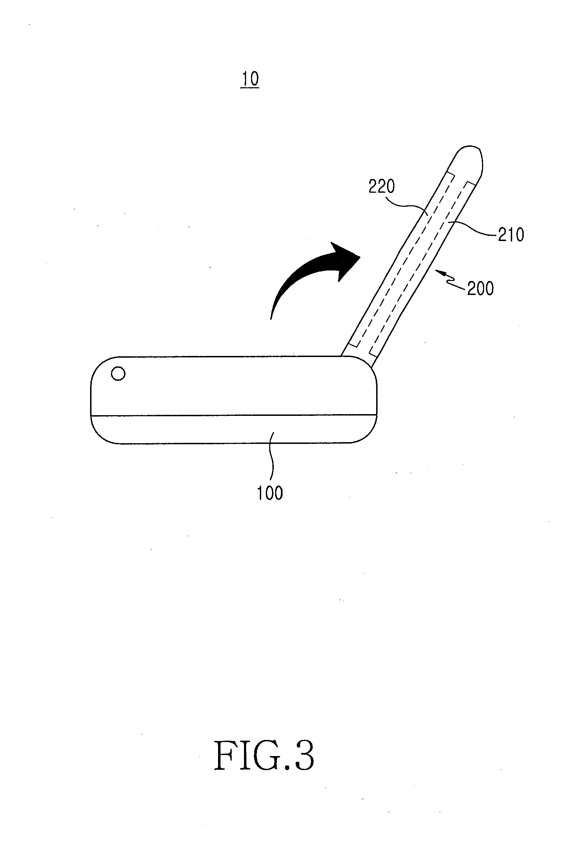

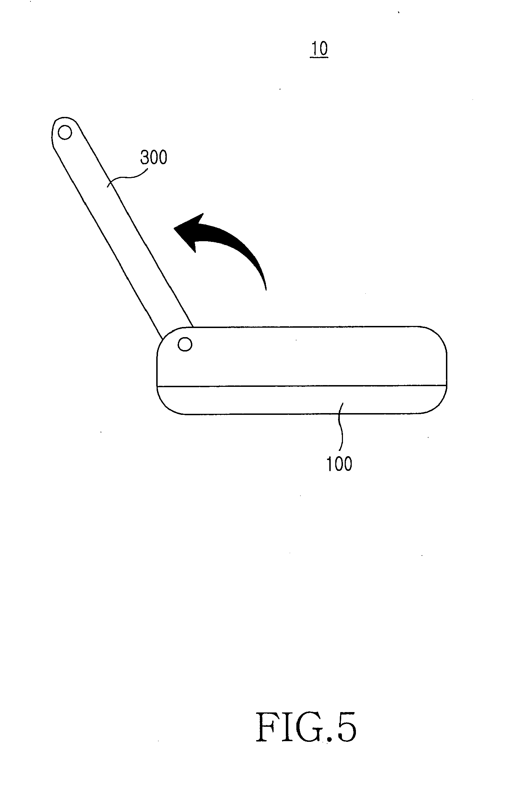

More particularly, as shown in FIGs. 1 to 6, the portable communication terminal 10 includes a main housing 100 having at least one key 113, 120, and 130 and a rotatable housing 200 provided with at least one display device 210 and 220 and connected to the main housing 100 so as to rotate about first and second hinge axes A1 and A2. The rotatable housing 200 can rotate about the first hinge axis A1 towards or away from the main housing 100 so as to fold onto or unfold from the main housing 100, as well as about the second hinge axis A2.

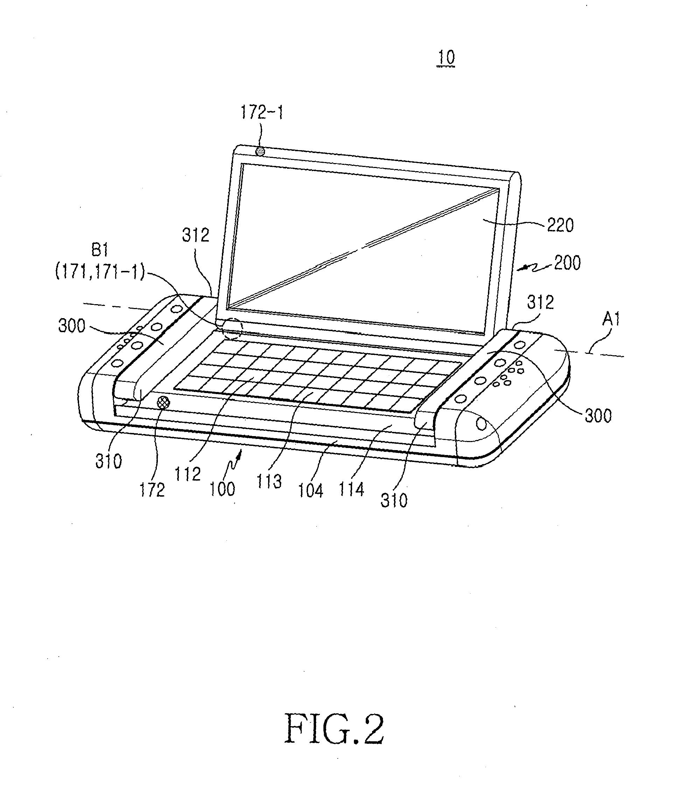

The rotatable housing 200, which is constructed as mentioned above, can be cradled on the main housing 100 at an angle in at least two manners. FIGs. 2, 4, and 6 show three manners of cradling the display devices 210 and 220 on the main housing 100 at an angle.

The first hinge axis A1 extends in the longitudinal direction of the main housing 100 and rotatable housing 200, particularly along one lateral end 312 of the rotatable housing 200. The second hinge axis S2 extends in the longitudinal direction of the main housing 100 and rotatable housing 200, particularly along the lateral end 104 of the main housing 100. As such, the first and second hinge axes A1 and A2 are parallel to each other and are always the same distance apart.

The main housing 100 has a first recess 112 depressed therefrom by a predetermined depth so as to receive the rotatable housing 200 and at least one second recesses 114 and 116 depressed from the bottom of the first recess 112 by a predetermined depth so as to allow the rotatable housing 200 to rotate. The second recesses 114 and 116 are positioned adjacent to the lateral ends 104 and 102 of the main housing 100, respectively. The first recess 112 has a flat bottom, while the second recesses 114 and 116 have a curved bottom. The first recess 112 has a slot shape, while the second recesses 114 and 116 have a concave shape. The second recess 114 extends along the second hinge axes A2.

The keys include a number of central keys 113 arranged on the bottom of the first recess 112, as well as and left and right keys 120 and 130 positioned on the upper surface of the main housing 100, which is elevated from both sides of the first recess 112. These keys 113, 120, and 130 generate corresponding signals when their key tops are pressed. The central keys 113 are arranged for use in a QWERTY mode, while the left and right keys 120 and 130 are arranged for use in a phone mode, an MP3 mode, or game mode.

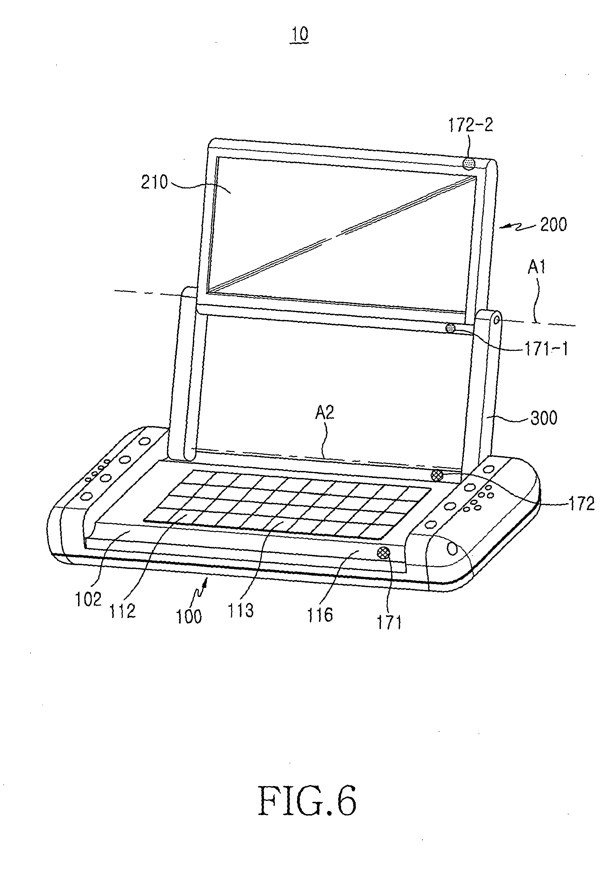

At least one connection arm 300 is positioned between the main housing 100 and the rotatable housing 200 so as to rotate them relative to each other. The connection arm 300 has the shape of an elongated rod and is symmetrically positioned between the main and rotatable housings 100 and 200. One end 310 of the connection arm 300 is connected to the main housing 100, and the other end 312 to the rotatable housing 200. The first and second hinge axes A1 and A2 extend through the ends 312 and 310, respectively. When the rotatable housing 200 rotates away from the main housing 100 about the first or second hinge axis A1 or A2, the connection arm 300 rotates together with the main or rotatable housing 100 and 200. When the rotatable housing 100 rotates about both first and second hinge axes A1 and A2, the connection arm 300 may escape from the main or rotatable housing 100 or 200 instead of rotating together with one of them, as shown in FIG. 6. The connection arm 300 is preferably made of a light metallic material so as to provide structural rigidity.

The rotatable housing 200 includes first and second display devices 210 and 220 positioned on its top and bottom surfaces, respectively. Particularly, only the first and second display devices 210 and 220 are positioned on the top and bottom surfaces of the rotatable housing 220, respectively. The first and second display devices 210 and 220 are laminated on each other so as to face away from each other.

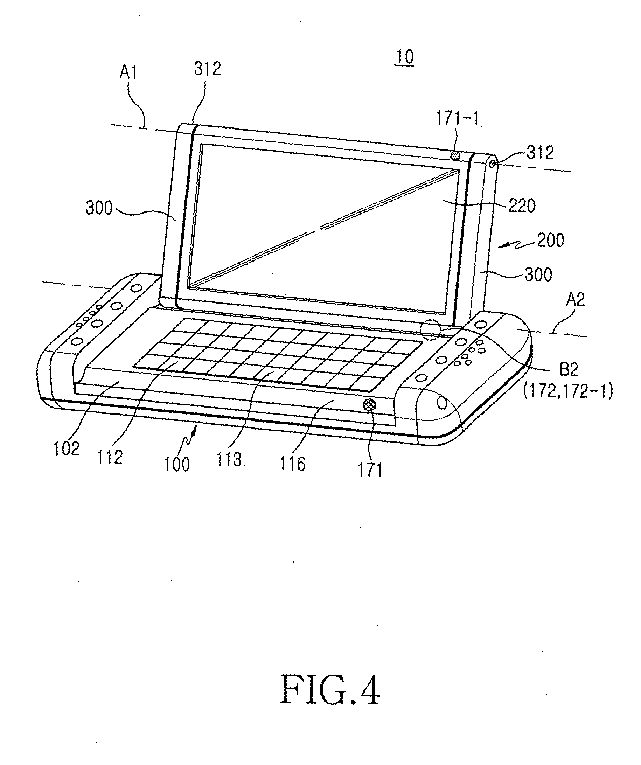

FIGs. 2 and 4 show the second display device 220 cradled on the main housing 100 at an angle, and FIG. 6 shows the first display device 210 cradled thereon at an angle. Although the first and second display devices 210 and 220 are preferably made of LCDs, the first display device 210 may include a touch screen to be used as an information input/output device.

As shown in FIGs. 2 and 4, the first and second hinge axes A1 and A2 are perpendicular to the connection arm 300. The rotatable housing 200 may rotate about both first and second hinge axes A1 and A2 so that it is hung over the main housing 100 by the connection arm 300, as shown in FIG. 6. It can be easily understood by those skilled in the art that a hinge device (not shown) provides stopping force. In addition, hinge modules (not shown) are positioned inside the main and rotatable housings 100 and 200, which are coupled to the ends 310 and 320 of the connection arm 300, respectively. The hinge modules may have automatic, manual, or semi-automatic driving sources. In the case of automatic driving sources, they may be composed of a conventional motor, a motor reduction unit, and a motor control unit; in the case of semi-automatic driving sources, they may be composed of a conventional hinge shaft, a hinge cam, and a hinge spring; and, in the case of manual driving sources, they may be composed of a conventional damping gear.

Particularly, when the rotatable housing 200 is rotated about the second hinge axis A2 and then about the first hinge axis A1, it is hung over the main housing 100 by the connection arm 300.

When the display device is cradled on the main housing at an angle as shown in FIGs. 2, 4, or 6, it is suitable for a DMB mode and, in a state shown in FIG. 1, it is preferably used in a phone mode.

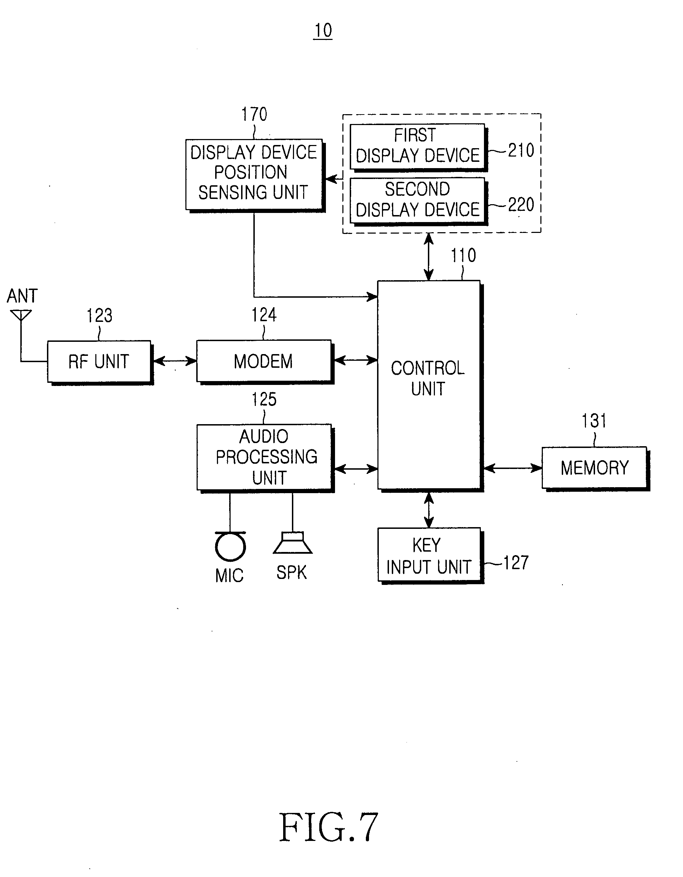

FIG. 7 shows the construction of a portable communication terminal according to an exemplary embodiment of the present invention.

Referring to FIG. 7, an RF unit 123 is in charge of wireless communication of the portable communication terminal. The RF unit 123 includes an RF transmitter for amplification of transmitted signals and up-conversion of their frequency, as well as an RF receiver for low-noise amplification of received signals and downconversion of their frequency. A modem 124 has a transmitter for encoding and modulating transmitted signals and a receiver for decoding and demodulating received signals. An audio processing unit 125 may constitute a codec, which has a data codec for processing packet data, for example, and an audio codec for processing audio signals (e.g. voices). The audio processing unit 125 converts digital audio signals, which are received from the modem 124, into analog signals through the audio codec. In addition, the audio processing unit 125 converts analog audio signals, which are generated and transmitted by a microphone, into digital audio signals through the audio codec and transmits them to the modem 124. The codec may be a separate component or may be integral with a control unit 110.

A memory 131 may be composed of a program memory and a data memory. The program memory stores a program for controlling the overall operation of the portable communication terminal. According to an exemplary embodiment of the present invention, the memory 131 also stores a program for turning on/off first and second display devices according to their position in a controlled manner, as well as for turning on an LED in such a manner that a character/number in a corresponding one of two regions, which are allocated to each key of a key input unit, is displayed according to the position of the display devices. The data memory temporarily stores data generated when the programs are run.

The control unit 110 controls the overall operation of the portable communication terminal. The control unit 110 may incorporate the modem 124 and the codec. According to an exemplary embodiment of the present invention, the control unit 110 determines the current mode of the portable communication terminal based on position signals from position sensing units 170 of the display devices 210 and 220 and turns on/off the first and second display devices 210 and 220 in a controlled manner. In addition, the control unit 110 turns on a corresponding LED so as to display a character/number in one of two regions, which are allocated to each key of the key input unit 127, according to the position of the display devices 210 and 220.

The control unit 110 determines that the portable communication terminal is one of first to fourth modes, which are shown in FIGs. 1, 2, 4, and 6, respectively, based on one of first to fourth position signals outputted from the position sensing units 170 of the display devices.

The display devices display user data outputted by the control unit 110. The display devices may be composed of LCDs and, in this case, include an LCD controller, a memory for storing video data, and an LCD display device. When touch screen type LCDs are used as the display devices, they may also be used as input units.

According to an exemplary embodiment of the present invention, the display devices include first and second display devices 210 and 220, which are positioned on the top and bottom surfaces of the rotatable housing 200, respectively.

The position sensing units 170 of the display devices senses the position of the display devices and transmit corresponding position signals to the control unit 110. The position sensing units 170 include at least two sensors and at least two magnets.

It will be assumed in the following description that, according to an exemplary embodiment of the present invention, the position sensing units 170 of the display devices include first and second sensors 171 and 172 and first and second magnets 171-1 and 172-1.

The first and second sensors 171 and 172 are positioned on the main housing 100 of the portable communication terminal. Particularly, the first sensor 171 is positioned on a part of the main housing 100, which abuts the rotatable housing 200 when it rotates about the first hinge axis A1, and the second sensor 172 is positioned on a part of the main housing 100, which abuts the rotatable housing 200 when it rotates about the second hinge axis A2.

The first and second magnets 171-1 and 172-1 are positioned on the rotatable housing 200. Particularly, the first magnet 171-1 is positioned on a part of the rotatable housing 200, which contacts the first sensor 170 on the main housing 100 when the rotatable housing 200 rotates about the first hinge axis A1, and the second magnet 172-1 is positioned on a part of the rotatable housing 200, which contacts the second sensor 172 on the main housing 100 when the rotatable housing 200 rotates about the second hinge axis A2.

The position sensing units 170, including the first and second sensors 171 and 172 and the fist and second magnets 171-1 and 172-1 as mentioned above, provides one of first to fourth position signals.

Particularly, when the first and second sensors 171 and 172 contact the first and second magnets 171-1 and 172-1 as indicated by B1 and B2 in FIG. 1, respectively, the position sensing units 170 generate a first position signal and transmit it to the control unit 110.

When only the first sensor 171 contacts the first magnet 171-1 as indicated by B1 in FIG. 2, the position sensing units 170 generate a second position signal and transmit it to the control unit 110.

When only the second sensor 172 contacts the second magnet 172-1 as indicated by B2 in FIG. 4, the position sensing units 170 generate a third position signal and transmit it to the control unit 110.

When both the first and second sensors 171 and 172 do not contact the first and second magnets 171-1 and 172-1, respectively, as shown in FIG. 6 and when both the first and second sensors 171 and 172 sense no signal, the position sensing units 170 generate a fourth position signal and transmit it to the control unit 110.

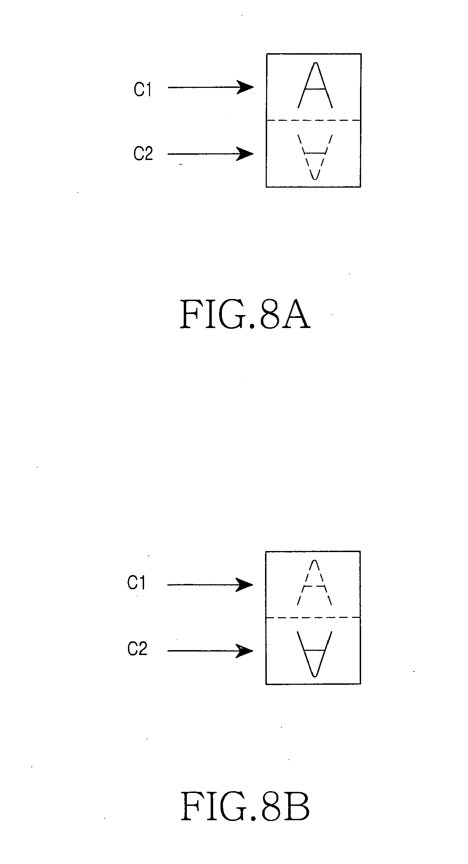

The key input unit 127 has keys for inputting numbers/characters and function keys for setting up various functions. According to an exemplary embodiment of the present invention, the key input unit 127 includes central keys 113, as well as left and right keys 120 and 130. Each key of the key input unit 127 has first and second regions, in which a character/number and its mirror image are arranged, respectively. FIGs. 8a and 8b show examples of a key having first and second regions C1 and C2. In the case of FIG. 8a, an LED corresponding to only the first region C1 is turned on so as to display the character/number in the first region C1 and, in the case of FIG. 8b, an LED corresponding to only the second region C2 is turned on so as to display the character/number in the second region C2. Such arrangement is aimed at displaying a characters/number in a corresponding region of each key, based on the position of the display devices 210 and 220, so that the characters/number is seen in a suitable orientation regardless of the position of the display devices 210 and 220. When the portable communication terminal is in a first mode as shown in FIG. 1, the character/number in one of two regions of each left and right keys 120 and 130 is displayed according to the user's selection or by default. When the portable communication terminal is in a second mode as shown in FIG. 2, the character/number in the first region C1 of each key is displayed. When the portable terminal is in a third or fourth mode as shown in FIG. 4 or 6, the character/number in the second region C2 of each key is displayed.

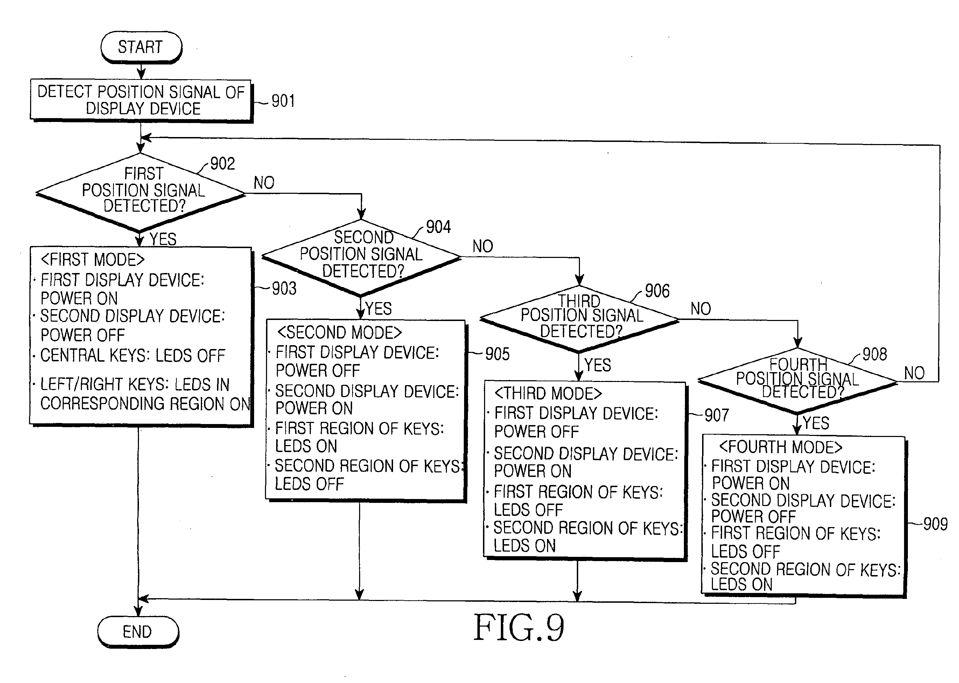

A method for turning on/off the first and second display devices of the portable communication apparatus according to an exemplary embodiment of the present invention, based on their position, and displaying characters/numbers in the corresponding region of keys will now be described in detail with reference to FIG. 9.

FIG. 9 is a flowchart showing a method for controlling display devices and keys of a portable communication terminal, based on the position of the display devices, according to an exemplary embodiment of the present invention.

Referring to FIG. 9, the position sensing units 170 of the display devices on the rotatable housing 200 sense the position of the display devices while the portable communication terminal is turned on in step 901. When the first and second sensors 171 and 172 contact the first and second magnets 171-1 and 172-1 as indicated by B1 and B2 in FIG. 1, respectively, the position sensing units 170 generate a first position signal and transmit it to the control unit 110 in step 901. When the control unit 170 detects the first position signal from the position sensing units 170 in step 902, it determines that the portable communication terminal is in a first mode and proceeds to step 903. The control unit 110 turns on the first display device 210 and turns off the second display device 220 in step 903. In addition, the control unit 110 turns off LEDs for displaying characters/numbers of the central keys 113 and turns on LEDs for displaying characters/numbers in the corresponding region of the left and right keys 120 and 130 so that corresponding functions are performed.

When only the first sensor 171 contacts the first magnet 171-1 as indicated by B1 in FIG. 2, the position sensing units 170 generate a second position signal and transmit it to the control unit 110 in step 901. When the control unit 170 detects the second position signal from the position sensing units 170 in step 904, it determines that the portable communication terminal is in a second mode and proceeds to step 905. The control unit 110 turns off the first display device 210 and turns on the second display device 220 in step 905. In addition, the control unit 110 turns on LEDs for displaying characters/numbers in the first region C1 of both regions of the central, left, and right keys 113, 120, and 130 constituting the key input unit 127 and turns off LEDs for displaying characters/numbers in the second region C2, so that corresponding functions are performed.

When only the second sensor 172 contacts the second magnet 172-1 as indicated by B2 in FIG. 4, the position sensing units 170 generate a third position signal and transmit it to the control unit 110 in step 901. When the control unit 170 detects the third position signal from the position sensing units 170 in step 906, it determines that the portable communication terminal is in a third mode and proceeds to step 907. The control unit 110 turns off the first display device 210 and turns on the second display device 220 in step 907. In addition, the control unit 110 turns off LEDs for displaying characters/numbers in the first region C1 of both regions of the central, left, and right keys 113, 120, and 130 constituting the key input unit 127 and turns on LEDs for displaying characters/numbers in the second region C2, so that corresponding functions are performed.

When both the first and second sensors 171 and 172 do not contact the first and second magnets 171-1 and 172-1, respectively, as shown in FIG. 6 and when both the first and second sensors 171 and 172 sense no signal, the position sensing units 170 generate a fourth position signal and transmit it to the control unit 110 in step 901. When the control unit 170 detects the fourth position signal from the position sensing units 170 in step 908, it determines that the portable communication terminal is in a fourth mode and proceeds to step 909. The control unit 110 turns on the first display device 210 and turns off the second display device 220 in step 909. In addition, the control unit 110 turns off LEDs for displaying characters/numbers in the first region C1 of both regions of the central, left, and right keys 113, 120, and 130 constituting the key input unit 127 and turns on LEDs for displaying characters/numbers in the second region C2, so that corresponding functions are performed.

As mentioned above, exemplary embodiments of the present invention is advantageous in that, since the display devices can be cradled on the main housing at an angle in at least two, and particularly three manners, the user can watch the display devices more conveniently by cradling it as desired through an easy process. Particularly, the user can conveniently watch moving pictures in a DMB mode together with stereo sounds. In addition, the terminal can be conveniently used in a multimedia environment, e.g. in a QWERTY mode. Furthermore, the simple mechanical structure for cradling the display devices at an angle makes it possible to easily assemble the terminal with reduced costs.

While certain exemplary embodiments of the invention have been shown and described herein with reference to a certain preferred embodiments thereof, it will be understood by those skilled in the art that various changes in form and details may be made therein without departing from the spirit and scope of the invention as defined by the appended claims and their equivalents.

## Claims

1. A dual axis rotation type portable communication terminal comprising:
a main housing having at least one key; and
a rotatable housing having at least one display device, the rotatable housing being connected to the main housing so as to rotate about a first hinge axis extending in a longitudinal direction of the main housing so that the rotatable housing is cradled on the main housing at an angle, the rotatable housing being adapted to rotate about a second hinge axis extending parallel to the first hinge axis so that the rotatable housing is cradled on the main housing at an angle in at least two different positions relative to the main housing.

2. The terminal as claimed in claim 1, wherein the main housing has a first recess depressed by a depth so as to receive the rotatable housing, the first recess having a flat bottom, and at least one second recess depressed from the bottom of the first recess by a depth so as to allow the rotatable housing to rotate, the at least one second recess having a curved bottom.

3. The terminal as claimed in claim 2, wherein the key comprises:
a number of central first keys arranged on the bottom of the first recess; and
at least two second keys positioned on a top surface of the main housing, the top surface of each of at least two second keys being elevated from a side of the first recess.

4. The terminal as claimed in claim 1, further comprising at least one connection arm positioned between the main housing and the rotatable housing.

5. The terminal as claimed in claim 4, wherein the connection arm is elongated and is symmetrically positioned between the main housing and the rotatable housing.

6. The terminal as claimed in claim 4, wherein the connection arm has an end connected to the main housing and a different end connected to the rotatable housing.

7. The terminal as claimed in claim 6, wherein the connection arm is adapted to move together with the main housing when the rotatable housing rotates about the first hinge axis, the connection arm moving together with the rotatable housing when the rotatable housing rotates about the second hinge axis.

8. The terminal as claimed in claim 1, wherein the rotatable housing comprises:
a first display device positioned on a top surface; and
a second display device positioned on a bottom surface, the first and second display devices facing away from each other.

9. The terminal as claimed in claim 1, wherein the first hinge axis extends parallel to a lateral end of the rotatable housing, the second hinge axis extends parallel to a lateral end of the main housing, and the first and second hinge axes are perpendicular to the connection arm.

10. The terminal as claimed in claim 1, wherein the rotatable housing is adapted to rotate about the first and second hinge axes, respectively, so as to be spaced apart from the main housing.

11. The terminal as claimed in claim 10, wherein the rotatable housing is adapted to rotate about the first hinge axis and then rotate about the second hinge axis so as to be spaced apart from the main housing.

12. The terminal as claimed in claim 1, wherein the rotatable housing being cradled on the main housing at an angle in at least two different positions relative to the main housing comprises:
a first position wherein the main housing and rotatable housing are positioned adjacent to each other; and
a second position wherein the main housing and rotatable housing are positioned spaced apart from each other.

13. A dual axis rotation type portable communication terminal comprising:
a first user interface unit; and
a second user interface unit adapted to rotate about a first hinge axis towards or away from the first user interface unit by means of a connection arm, the second user interface unit being adapted to rotate about a second hinge axis towards or away from the first user interface unit by means of the connection arm so as to be cradled on the first user interface unit at an angle in at least two different positions relative to the first user interface unit, the second hinge axis extending parallel to the first hinge axis.

14. The terminal as claimed in claim 13, wherein the first user interface unit is a data input device having a number of keys arranged on a top surface, and the second user interface unit is a data output device having at least one display device, the display device comprising a first display positioned only on a top surface of the second user interface unit and a second display positioned only on a bottom surface of the second user interface unit so as to face away the first display.

15. The terminal as claimed in claim 13, wherein the first and second user interface units are perpendicular to the connection arm.

16. The terminal as claimed in claim 13, wherein the second user interface unit being cradled on the first user interface unit at an angle in at least two different positions relative to the first user interface unit comprises:
a first position wherein the first user interface unit and second user interface are positioned adjacent to each other; and
a second position wherein the first user interface unit and second user interface are positioned spaced apart from each other.

17. A portable communication terminal comprising:
a main housing;
a rotatable housing;
a first display device positioned on a top surface of the rotatable housing;
a second display device positioned on a bottom surface of the rotatable housing so as to face away from the first display device;
a display device position sensing unit for sensing a position of the first and
second display devices relative to the main housing;
a key input unit having a number of keys, each key having first and second regions, at least one of a character and number and a mirror image of the at least one of the character and number being positioned in the first and second regions, respectively; and
a control unit for determining a current mode of the portable communication terminal based on a position signal outputted by the display device position sensing unit, the control unit for controlling the display device, the control unit for controlling the key input unit so that the at least one of the characters and numbers in a corresponding region of the keys are displayed.

18. The apparatus as claimed in claim 17, wherein the display device position sensing unit comprises at least two sensors and at least two magnets.

19. The apparatus as claimed in claim 18, wherein the display device position sensing unit comprises first and second sensors and first and second magnets, the display device position sensing unit generating a first position signal when both the first and second sensors contact the first and second magnets, respectively, the display device position sensing unit generating a second position signal when only the first sensor contacts the first magnet, the display device position sensing unit generating a third position signal when only the second sensor contacts the second magnet, the display device position sensing unit generating a fourth position signal when both the first and second sensors do not contact the first and second magnets, respectively.

20. The apparatus as claimed in claim 17, wherein the control unit determines that the portable communication terminal is one of first to fourth modes based on one of first to fourth position signals outputted by the display device position sensing unit and, based on a corresponding mode, controls the first and second display devices to be on or off and controls LEDs for displaying the at least one of the characters and numerals in a corresponding region of the keys of the key input unit to be on or off.

21. The apparatus as claimed in claim 20, wherein, when the display device position sensing unit outputs the first position signal, the control unit determines that the portable communication terminal is in the first mode, turns on the first display device, turns off the second display device, and turns on corresponding LEDs for displaying the at least one of the characters and numbers in one of the first and second regions of the keys of the key input unit.

22. The apparatus as claimed in claim 20, wherein, when the display device position sensing unit outputs the second position signal, the control unit determines that the portable communication terminal is in the second mode, turns off the first display device, turns on the second display device, turns on corresponding LEDs for displaying the at least one of the characters and numbers in the first region of the keys of the key input unit, and turns off corresponding LEDs for displaying the at least one of the characters and numbers in the second region of the keys of the key input unit.

23. The apparatus as claimed in claim 20, wherein, when the display device position sensing unit outputs the third position signal, the control unit determines that the portable communication terminal is in the third mode, turns off the first display device, turns on the second display device, turns off corresponding LEDs for displaying the at least one of the characters and numbers in the first region of the keys of the key input unit, and turns on corresponding LEDs for displaying the at least one of the characters and numbers in the second region of the keys of the key input unit.

24. The apparatus as claimed in claim 20, wherein, when the display device position sensing unit outputs the fourth position signal, the control unit determines that the portable communication terminal is in the fourth mode, turns on the first display device, turns off the second display device, turns off corresponding LEDs for displaying the at least one of the characters and numbers in the first region of the keys of the key input unit, and turns on corresponding LEDs for displaying the at least one of the characters and numbers in the second region of the keys of the key input unit.

25. A method for controlling first and second display devices and a key input unit of a portable communication terminal, the key input unit having a number of keys, each key having first and second regions, the method comprising the steps of:
(a) sensing a position signal indicating a positional condition of the display devices; and
(b) determining a current mode of the portable communication terminal based on the position signal, turning the display devices on or off in a controlled manner, and controlling the key input unit so that at least one of characters and numbers in a corresponding region of the keys of the key input unit are displayed.

26. The method as claimed in claim 25, wherein the position signal indicating the positional condition of the display devices is sensed according to a position of a rotatable housing having the display devices.

27. The method as claimed in claim 25, wherein step (b) comprises the steps of:
determining that the portable communication terminal is one of first to fourth modes based on a sensed position signal among first to fourth position signals outputted according to the positional condition of the display devices; and
controlling the first and second display devices to be on or off and controlling LEDs for displaying the at least one of the characters and numerals in a corresponding region of the keys of the key input unit to be on or off according to a corresponding mode when the current mode of the portable communication terminal is determined.

28. The method as claimed in claim 27, wherein step (b) comprises a step of:
turning on the first display device, turing off the second display device, and turning on corresponding LEDs for displaying the at least one of the characters and numbers in one of the first and second regions of the keys of the key input unit, when it is determined that the portable communication terminal is in the first mode based on sensing of the first position signal.

29. The method as claimed in claim 27, wherein step (b) comprises a step of:
turning off the first display device, turning on the second display device, turning on corresponding LEDs for displaying the at least one of the characters and numbers in the first region of the keys of the key input unit, and
turning off corresponding LEDs for displaying the at least one of the characters and numbers in the second region of the keys of the key input unit, when it is determined that the portable communication terminal is in the second mode based on sensing of the second position signal.

30. The method as claimed in claim 27, wherein step (b) comprises a step of:
turning off the first display device, turning on the second display device, turning off corresponding LEDs for displaying the at least one of the characters and numbers in the first region of the keys of the key input unit, and
turning on corresponding LEDs for displaying the at least one of the characters and numbers in the second region of the keys of the key input unit, when it is determined that the portable communication terminal is in the third mode based on sensing of the third position signal.

31. The method as claimed in claim 27, wherein step (b) comprises a step of:
turning on the first display device, turning off the second display device, turning off corresponding LEDs for displaying the at least one of the characters and numbers in the first region of the keys of the key input unit, and
turning on corresponding LEDs for displaying the at least one of the characters and numbers in the second region of the keys of the key input unit, when it is determined that the portable communication terminal is in the fourth mode based on sensing of the fourth position signal.
